(19) Europäisches Patentamt
European Patent Office
Office européen des brevets

(11) **EP 1 369 759 B1**

(12) **EUROPÄISCHE PATENTSCHRIFT**

(45) Veröffentlichungstag und Bekanntmachung des Hinweises auf die Patenterteilung:
**18.09.2013 Patentblatt 2013/38**

(51) Int Cl.:
***G05B 19/4103*** *(2006.01)*

(21) Anmeldenummer: 03011541.4

(22) Anmeldetag: **21.05.2003**

(54) **Bahnsteuerungsverfahren einer numerisch gesteuerten Maschine**

Path control method for a NC machine

Méthode de commande de trajectoire d'une machine à commande numérique

(84) Benannte Vertragsstaaten:
**DE FR GB**

(30) Priorität: **04.06.2002 DE 10224755**

(43) Veröffentlichungstag der Anmeldung:
**10.12.2003 Patentblatt 2003/50**

(73) Patentinhaber: **Siemens Aktiengesellschaft**
**80333 München (DE)**

(72) Erfinder: **Uhlich, Andreas**
**90530 Wendelstein (DE)**

(56) Entgegenhaltungen:
DE-A- 3 521 072    DE-A- 3 543 407
US-A- 5 418 731    US-A- 5 726 896

- YEUNG M K ET AL: "CURVE FITTING WITH ARC SPLINES FOR NC TOOLPATH GENERATION" , COMPUTER AIDED DESIGN, ELSEVIER PUBLISHERS BV., BARKING, GB, VOL. 26, NR. 11, PAGE(S) 845-849 XP000490046 ISSN: 0010-4485 * Seite 847-848; Abbildungen 5-7 *
- HUTZLER H: "VERSATILE CONTROL FOR HIGHLY COMPLEX MACHINE TOOLS" , ENGINEERING AND AUTOMATION, SIEMENS AKTIENGESELLSCHAFT, BERLIN, DE, VOL. 13, NR. 6, PAGE(S) 8-11 XP000270304 ISSN: 0939-2068 * Abbildung 5 *
- AUSTIN S P ET AL: "Comparison of discretization algorithms for nurbs surfaces with application to numerically controlled machining" , COMPUTER AIDED DESIGN, ELSEVIER PUBLISHERS BV., BARKING, GB, VOL. 29, NR. 1, PAGE(S) 71-83 XP004069080 ISSN: 0010-4485 * Zusammenfassung *

**Beschreibung**

Die Erfindung bezieht sich auf ein Verfahren zur dreidimensionalen Bahnbeschreibung bei einer industriellen Bearbeitungsmaschine wie einer Werkzeugmaschine, einem Handhabungsautomaten oder dergleichen.

Aus dem Europäischen Patentanmeldung 0417337 A1 ist ein Verfahren zur Bansteuerung einer numerisch gesteuerten Maschine oder eines Roboters bekannt bei dem eine Splineinterpolation eingesetzt wird. Die Achsparameter (x,y) sind dabei als Funktionen eines Bahnparameters (s) gegeben. Zum Zwecke der Steuerung einer Bahngeschwindigkeit werden entweder die Verläufe der Funktionen gedehnt oder die Verläufe werden mit unterschiedlicher Schrittweite abgetastet. Ferner ist es möglich, entsprechend einem angesterbten Geschwindigkeitsprofil die Stützorte der Splines hinsichtlich des Wertes für den Bahnparameter zu variieren.

Nachteilig dabei ist die beschränkte Wahl von nur zwei Achsparameter bezüglich eines feststehenden karthesischen Koordinatensystems, durch welches zweidimensionale Darstellungen ermöglicht sind, bei der Verwendung einer Splineinterpolation. Dies schränkt die Nutzung der Splineinterpolation zur Bahnsteuerung numerisch gesteuerter Maschinen oder eines Roboters ein. Ein Beispiel für die bisherige Anwendung von Spline-Interpolationen ist der Anwenderdokumentation und Programmieranleitung "SINUMERIK System 800" Ausgabe 09.88 der Siemens AG (Bestell- Nr. 6ZB5 410- 7BA01-0BA0) zu entnehmen.

Ein Beispiel einer numerisch gesteuerten Maschine ist eine Werkzeugmaschine, insbesondere eine Drehmaschine. Die Drehmaschine weist zumindest eine Drehfunktionalität auf. Bei der Technologie des Drehens sind insbesondere Unrundkonturen von besonderem Interesse. Eine Unrundkontur, welche auch in verschiedene Sektoren aufteilbar ist, zeichnet sich für das Drehen beispielsweise derart aus, dass als abhängige Größe ein radialer Abstand r von bis zu zwei unabhängigen Größen z und c geometrisch geführt wird. Dabei sei z die Position auf einer z-Achse und c eine Winkelposition. Daraus ergibt sich eine Funktion f für den radialen Abstand r mit $r=f(z,c)$. Für eine Anzahl von n-Sektoren werden unterschiedliche diskrete Tabellen für $r=f(c)$ definiert und in einer numerischen Steuerung abgelegt und zu bestimmten Positionen der z-Achse abgerufen. Es erfolgt als an bestimmten Positionen der z-Achse eine Umschaltung der Tabellen. Die Tabellen sind sehr umfangreich und benötigen einen großen Speicher. Weiterhin ist durch diese Methode der Bewegungsführung eine vollständige und kontinuierliche Beschreibung einer Freiformfläche für das Drehen nicht möglich. Dies liegt insbesondere darin begründet, daß die Tabellen zweidimensional aufgebaut sind und lediglich diskret gewechselt werden können.

Dokument EP0543141 A1 offenbart ein Steuerungsverfahren zur dreidimensionalen Bahnbeschreibung bei einer industriellen Bearbeitungsmaschine zur Beschreibung zumindest eines Kurvenverlaufes für eine Bewegungsführung wobei zur Beschreibung des Kurvenverlaufes zumindest eine Interpolation angewandt wird.

Aufgabe der Erfindung ist es ein verbessertes Verfahren zur dreidimensionalen Bahnbeschreibung einer industriellen Bearbeitungsmaschine anzugeben.

Gemäß der Erfindung wird diese Aufgabe durch ein Steuerungsverfahren zur dreidimensionalen Bahnbeschreibung bei einer industriellen Bearbeitungsmaschine, wie einer Werkzeugmaschine, einem Handhabungsautomaten, oder dergleichen zur Beschreibung zumindest eines Kurvenverlaufes für eine Bewegungsführung gelöst, wobei zur Beschreibung des Kurvenverlaufes zumindest eine Interpolation angewandt wird, und wobei zumindest ein Interpolationsparameter eine Funktion einer Winkelangabe darstellt, und wobei durch den Kurvenverlauf eine Unrundkontur und/oder eine Freiformfläche eines Werkstückes beschrieben wird.

Dabei bezieht sich die Bahnbeschreibung auf verschiedenste Anwendungsbereiche. So kann durch die Beschreibung einer Bahn eine Freiformfläche beschrieben sein. Eine andere Möglichkeit ist es durch die Bahnbeschreibung eines Bearbeitungswerkzeuges eine Freiformfläche eines Körpers entstehen zu lassen. Der Körper kann dabei selbst auch bewegt sein, so daß der Bahnverlauf des Werkzeuges unterschiedlich zur Freiformfläche des Körpers bzw. zu Konturen des Körpers ist. Ein Beispiel bei dem der Körper auch mit bewegt ist findet sich bei Drehmaschinen. Bearbeitungsmaschinen, welche zumindest auch fräsen oder schleifen, sind auch mit Rotationsachsen ausführbar, wobei auch hier erfindungsgemäße Vorteile nutzbar sind. Bei Handhabungsautomaten, wie Robotern sind ähnlich wie bei Drehmaschinen viele Achsen beteiligt. Bei Achsen welchen karthesische Koordinaten zugrunde liegen sind Interpolationen beispielsweise durch Splines durchführbar. Nun werden in vorteilhafter Weise auch Rotationsachsen, bei welchen eine Winkelangabe als Rotationsparameter zur Positionsbestimmung herangezogen werden kann einer Interpolation unterworfen. Dies birgt Vorteile bezüglich der Genauigkeit bei Bewegungsführungen, der Genauigkeit bei Oberflächenbehandlungen, bzw. -herstellung, aber auch bezüglich des Steuerungssystems, welches zur Durchführung der Bewegung herangezogen wird, da weniger Speicher von Nöten ist und auch eine schnellere Bewegungsführung erfolgen kann. Die Rotationsachse bzw. die Rotationsachsen mit dem bzw. den Rotationsparametern sind sowohl als reale funktionale Achsen ausbilbar als auch als virtuelle Achsen, die für eine Transformation zwischen Koordiantensystemen heranziehbar.

Als Interpolationsverfahren ist eine Polynomfunktion anwendbar. Als Interpolationsparameter ist zumindest ein Rotationsparameter verwandt. Ein Rotationsparameter, welcher den Interpolationsparameter darstellt, repräsentiert insbesondere einen Drehwinkel.

Der Drehwinkel ist oftmals als c bezeichnet. Ein derartiger Rotationsparameter kann seinerseits von zumindest einem andern Parameter abhängen, so dass der Rotationsparameter eine Funktion mit zumindest einer Variablen ist.

Eine weitere Möglichkeit Interpolationen bei einem Steuerungsverfahren zu nutzen ist dadurch gegeben, dass als Interpolation zumindest ein Spline angewandt wird.

Interpolationsverfahren, welche die Spline- Interpolation nutzen ermöglichen es wenige Stützpunkte einer Sollkontur mit glatten Kurvenverläufen zu verbinden. Einzelne Kurvensegmente werden beispielsweise mit jeweils gleicher Steigung und gleicher Krümmung aneinander gesetzt. Dadurch entsehen weiche Übergänge, was die Mechanik von Werkzeugmaschinen schont aber auch die Qualität einer durchgeführten Bearbeitung, wie fräsen, drehen, schleifen, schweißen oder lackieren steigert. Durch enges Setzen von Stützpunkten lassen sich aber auch scharfe Kanten programmieren. Eine andere Stärke der Spline- Interpolation ist es aber auch ein Teileprogramm der Bearbeitungsmaschine zu optimieren, da große Tabellen für die Beschreibung von Einzelpositionen nicht mehr nötig sind.

Es gibt verschiede Arten von Splines, z.B. Hermitte-Splines oder Kubische-Splines. Splines lassen sich z.B. nach dem Newton-Verfahren oder auch nach dem Verfahren der natürlichen Splines bestimmen. Ein Vorteil bei Splines, z.B. bei kubische Splines ist es, dass Randbedingungen bestimmbar sind. Eine von vielen anderen denkbaren funktionalen Bedingungen ist z.B. die Forderung nach einer minimalen kinetischen Änderung eines bewegten Körpers. Beim Übergang von einem Spline n zum anderen Spline n+1 sind dann Bedingungen für die Geschwindigkeit wie $\dot{x}_n = \dot{x}_{n+1}$ oder $\ddot{x}_n = \ddot{x}_{n+1}$ für eine Beschleunigung definierbar. Neben diesen auch als C-Splines bekannten Splines gibt es auch A-Splines ($\dot{x}_n = \dot{x}_{n+1}$ und $\ddot{x}_n \neq \ddot{x}_{n+1}$) oder B-Splines. B-Splines haben dieselben Randbedingungen wie C-Splines, jedoch einen anderen geometrischen Verlauf.

Die Anzahl von Stützpunkten kann gemäß bekannter Abtasttheoreme gewählt werden. Dabei ist insbesondere die maximale Rotationsgeschwindigkeit einer Rotationsachse zu berücksichtigen.

Hier ein Beispiel für ein Polynom dritten Grades:

$$x_e = a_0 + a_1 * t + a_2 * t^2 + a_3 * t^3 \,.$$

Durch ein Steuerungsverfahren gemäß der obig beschriebenen Art wird es ermöglicht, durch den Kurvenverlauf eine Unrundkontur und/oder eine Freiformfläche eines Werkstückes einfach zu beschreiben. Darüber hinaus kann aus dem Kurvenverlauf auch eine Bewegungsführung zumindest eines bewegten Körpers beschrieben werden.

Abhängig von der gegebenen Aufgabenstellung bei einer Bearbeitungsmaschine sind also verschieden Anwendungen der Spline-Interpolation möglich. So kann das Verfahren nicht nur zur Beschreibung einer Bewegung zumindest eines Körpers herangezogen werden, sondern auch zur Bewegung von zumindest zwei Körpern zueinander. Dies wäre Beispielhaft bei einer Drehmaschine der Fall, bei der sich sowohl das zu bearbeitende Werkstück rotatorisch bewegt, als auch das Werkzeug zur Bearbeitung des Werkstücks bewegt wird.

Die Anwendung der erfindungsgemäßen Verfahrens bietet verschieden Vorteile, wie die bessere Performance einer Bearbeitungsmaschine, wobei bei Drehmaschinen beispielsweise auch eine höhere maximale Drehzahl möglich wird. Das Verfahren ist vorteilhafterweise in Standardkomponenten numerischer Steuerungen ablauffähig, wobei auch eine universellere Programmerstellung ermöglicht wird. So sind freie Konturen einfach generierbar. Extra Hardwarkomponenten zur angenäherten Erstellung einer freien Kontur, bzw. auch auf den Anwendungsfall zugeschnittene Programmerstellungen über Positionstabellen sind vermeidbar.

Weitere Vorteile und Details gemäß der Erfindung ergeben sich anhand der nun folgenden Beschreibung vorteilhafter Ausführungsbeispiele und in Verbindung mit den Figuren. Soweit in unterschiedlichen Figuren Elemente mit gleichen Funktionalitäten beschrieben sind, sind diese mit gleichen Bezugszeichen gekennzeichnet. Es zeigen:

FIG 1     einen Körper, der eine sinuide Kontur aufweist,

FIG 2     eine Verdrehung innerhalb des Körpers,

FIG 3     eine Tabelle nach dem Stand der Technik zur Durchführung der Technologie Drehen,

FIG 4     zwei ineinander zu transformierende Koordinatensysteme,

FIG 5     ein Beispiel des Datenflusses zur Bahnbeschreibung,

FIG 6     eine erste Tabelle zur Beschreibung von Splines zur erfindungsgemäßen Bahnbeschreibung,

FIG 7     eine zweite Tabelle zur Beschreibung von Splines zur erfindungsgemäßen Bahnbeschreibung,

FIG 8     eine schematische Achsendarstellung einer Bearbeitungsmaschine

FIG 9     eine Gegenüberstellung einer freien Kontur zu einer Wertetabelle, und

FIG 10     eine Verschiebung des Koordinatenursprungs für Winkelbetrachtungen.

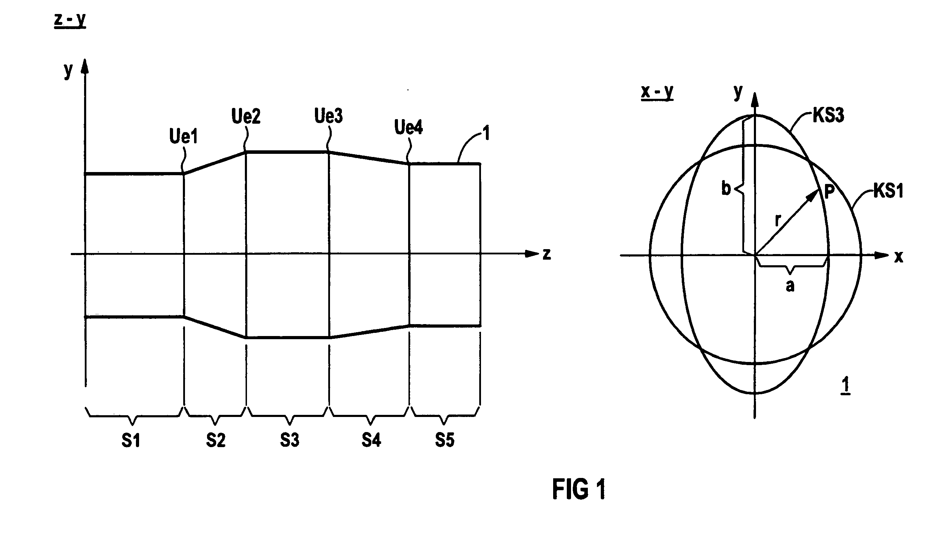

Die Darstellung gemäß Fig 1 zeigt ein Beispiel zum Drehen sinuider Konturen. Dabei ist ein Körper 1, beispielsweise ein Werkstück, in einem karthesischen Koordinatensystem mit den Achsen x, y und z darstellbar, wobei zur Vereinfachung der Körper 1 zum einen in einem z-y Koordinatensystem und zum anderen in einem x-y Koordinatensystem dargestellt ist. Der Körper 1, d.h. das konstruktive Element, ist in verschiedene Sektoren S1, S2, S3, S4 und S5 einteilbar, wobei die Sektoren in Übergängen Ue1, Ue2, Ue3 und Ue4 ineinander übergehen. Dieser Aufbau des Körpers 1 ist aus der Darstellung im z-y Koordinatensystem erkennbar. Die sinuide Kontur des Körpers 1 wird durch die zusätzliche Darstellung im x-y Koordinatensystem deutlich. Im x-y Koordinatensystem ist die äußere Kontur KS1 des Sektors S1 und eine äußere Kontur KS3 des Sektors S3 dargestellt. Ist die äußere Kontur KS1 des Sektors S1 identisch mit der des Sektors S5 so überdecken sich diese Konturen im x-y Koordinatensystem. Zur Beschreibung elliptischer Geometrien bzw. ovaler Geometrien sind Parameter erforderlich wie sie beispielsweise im x-y Koordinatensystem mit a, b und r bezeichnet sind, wobei r den Abstand r eines Punktes P der Kontur vom Koordinatenursprung 0 angibt. Die mathematische Beschreibung einer ebenen Ovalität ergibt sich aus folgenden Gleichungen:

$$(1) \qquad 1 = \frac{x^2}{a^2} + \frac{y^2}{b^2}$$

$$(2) \qquad X = a * \cos(u)$$

$$(3) \qquad Y = b * \sin(u)$$

$$(4) \qquad r = \sqrt{X^2 + Y^2}$$

mit

$$(5) \qquad 0 \leq u \leq 2\pi$$

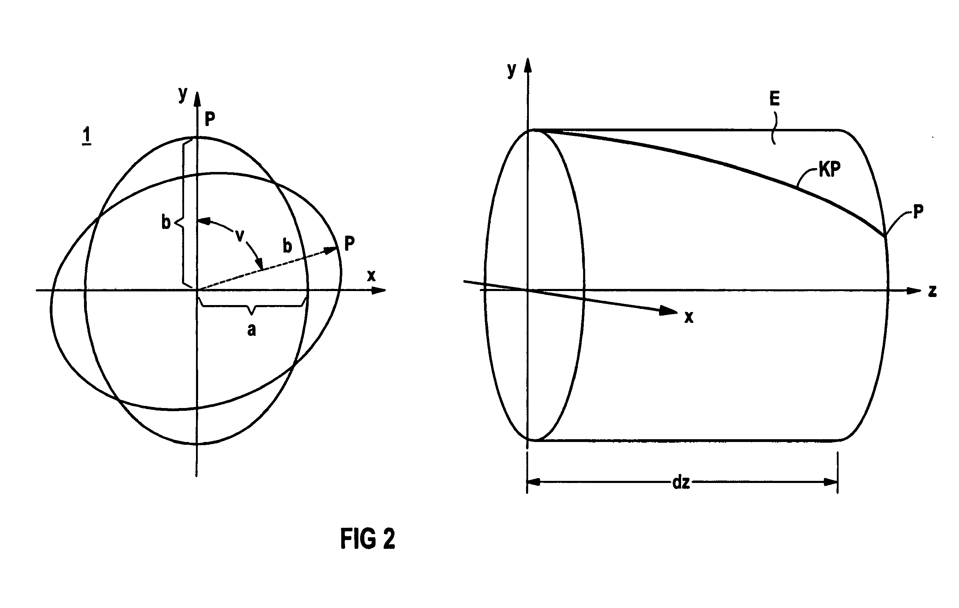

Der Übergang Ue1 vom Sektor S1 zum Sektor S2 bis hin zum Übergang Ue2 zum Sektor S3 ist als eine Art Verdrehung vorstellbar, wie sie in FIG 2 dargestellt ist. FIG 2 zeigt den Körper 1 in einem Schnitt des Sektors S2 im x- y- Koordinatensystem, wobei der Sektor S2 einen Übergang von Sektor S1 zum Sektor S3 zeigt. Durch eine Verdrehung V verschiebt sich der Punkt P von der y- Achse weg zur x- Achse hin. In der Darstellung gemäß FIG 2 mit dem x- y- z- Koordinatensystem ist die Verdrehung V auf einer zylindrischen Ebene ZE dargestellt. Ein Bezugzeichen dz gibt dabei einen Weg delta auf der z- Achse an. Im x- y- z- Koordinatensystem ist die Verschiebung des Punktes P abhängig von der Position z durch die Kurve KP dargestellt. Da sich der Punkt P im x- y- z Koordiantensystem von einem großen Wert auf der y- Achse zu einem kleinen Wert auf der y- Achse ändert, ist ein Konturverlauf gemäß des Sektors S4 dargestellt, wobei hier nicht der Anspruch auf Maßstäblichkeit erhoben wird.

Der in FIG 1 und in FIG 2 dargestellte Körper 1 ist durch eine Bearbeitungsmaschine, wie eine Drehmaschine herstellbar. Die Unrundkonturen, wie sie beispielsweise durch die Konturen des Sektors 1 KS1 und durch die Kontur des Sektors 2 KS2 dargestellt sind, zeichnen sich für die Technologie des Drehens derart aus, dass der Abstand r als abhängige Größe von bis zu zwei unabhängigen Größen geometrisch geführt wird. Der Abstand r ist also eine Funktion f mit r=f(z,c), wobei z einen Wert der z-Achse darstellt und c eine Winkelposition. Es ist bekannt, daß für eine Anzahl von n Bereichen unterschiedliche diskrete Tabellen r=f(c) in einer Steuerung definiert und abgelegt sind. Zu bestimmten Positionen der z-Achse werden die Tabellen r=f(c) aufeinander umgeschaltet. Bei Drehmaschinen bezieht sich die Position beispielsweise auf die Position des Drehmeisels, welcher von einem Werkstück, wie dies der Körper 1 darstellt, Material abträgt. Die Anzahl der Tabellen wird durch den zur Verfügung stehenden Speicherraum limitiert. Mit dieser Methode des Standes der Technik ist eine vollständige und/oder kontinuierliche Beschreibung der Kontur, d.h. im Prinzip einer Freiformfläche für das Drehen nicht möglich, da die Tabellen zweidimensional Aufgebaut sind, nur diskret gewechselt werden können und die Anzahl der Werte in den Tabellen begrenzt ist. Mit Tabellen des Standes der Technik ist im Gegensatz zur Erfindung außerdem ein universelle, allgemeingültige Beschreibung von Konturen, bzw. Freiformflächen nicht oder nur begrenzt möglich, da dies jeweils von der Kontur und/oder der Bearbeitungsmaschine abhängt.

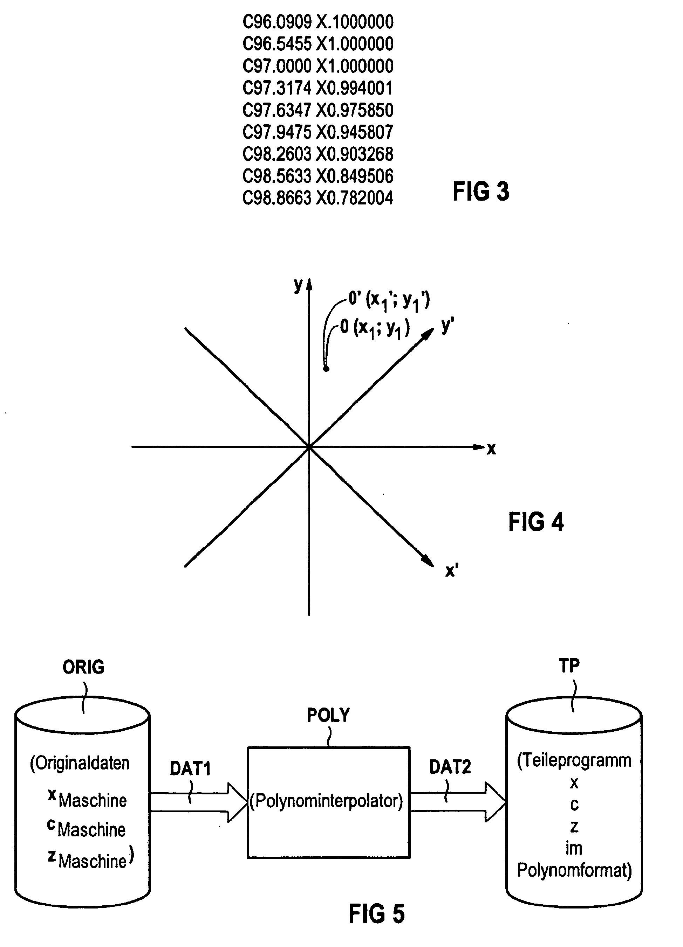

Einen kleinen Ausschnitt aus einer Tabelle der beschriebenen Art zeigt FIG 3, wobei hinter dem Parameter c die Winkelposition und hinter dem Parameter X die Position auf der x-Achse angegeben ist.

Zur Darstellung von Verschiebungen wie eine in FIG 2 dargestellt ist und/oder zur Umrechnung von Kontur-, bzw. Bahnverläufen sind mathematische Operationen erforderlich. In Figur 4 ist x-y-Koordinatensystem mit einer x-Achse x und einer y-Achse y und ein x'-y'-Koordinatensystem mit einer x'-Achse x'und einer y'-Achse y' dargestellt. Ein Punkt O im x-y-Koordinatensystem ist in das x'-y'-Koordinatensystem zu übertragen. Diese Übertragung, d.h. Transformation erfolgt beispielsweise durch folgende Formeln:

$$(6) \qquad \begin{bmatrix} X' \\ Y' \\ Z' \end{bmatrix} = ROT(Z) * \begin{bmatrix} X \\ Y \\ Z \end{bmatrix}$$

$$(7) \qquad X = \sqrt{X'^2 + Y'^2}$$

$$(8) \qquad c = \arctan \frac{Y'}{X'}$$

$$(9) \qquad Z = Z'$$

Die Achsen-Parameter x,y,z beziehen sich dabei beispielsweise auf die Achsen einer Bearbeitungsmaschine, wohingegen die Achsen-Paramter x', y' und z' ein Koordinatensystem zur verbesserten Darstellung darstellen.

Die Darstellung gemäß Figur 5 zeigt beispielhaft einen Datenfluß DAT1, DAT2 zur Beschreibung einer Bahn bw eines Bahnverlaufs. Für eine Bearbeitungsmaschine sind Bahnbeschreibungen von großer Bedeutung, da mit derartigen Beschreibungen sowohl Konturen und/oder Freiformflächen von zu bearbeitenden Werkstücken beschreibbar sind als auch von Bewegungsbahnen von zum Beispiel Werkzeugen. Werkzeuge sind z.B. spanende, schleifende, hobelnde, schweissende, und andere Werkzeuge. Daten zur Bahnbeschreibung, die sich beispielsweise auf das und/oder die Koordinatensysteme der Bearbeitungsmaschine beziehen und Originaldaten ORIG darstellen werden als Datenfluß DAT1 einem Polynominterpolator POLY zugeführt. Der Polynominterpolator wandelt die Originaldaten ORIG in Polynome um. Diese Polynome sind vorteilhafter weise Splines. Nach der Umwandlung im Polynominterpolator POLY ergibt sich ein Datenfluß DAT2, welcher die Daten in ein Teileprogramm TP spielt. Im Teileprogramm TP sind die Daten zur Bahnbeschreibung in einem Polynomvormat vorhanden. Nicht dargestellt ist ein nachfolgender Schritt, bei dem die Polynome in Achssollwerte gewandelt werden, wobei dies die Interpolation der Steuerung mit beinhaltet.

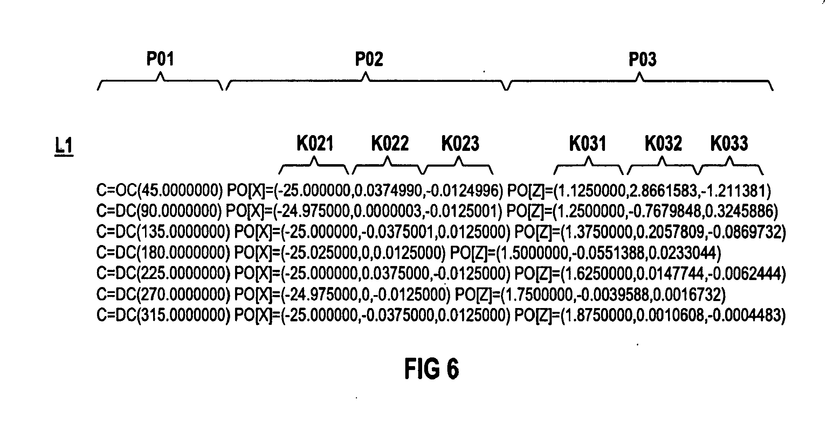

Die Darstellung gemäß FIG 6 zeigt eine Liste L1 bzw. abhängig von der Betrachtungsart eine Tabelle zur Beschreibung von Splines. Als Interpolationsparameter wird der Winkelparameter c einer Rotationsachse C, d.h. einer Rundachse herangezogen. Jede Zeile der Liste ist in verschieden Positionen PO1, PO2 und PO3 unterteilbar.

- Die Position 1 PO1 gibt die Position der Rundachse C an. Der Ausdruck in Klammer ist die Winkelposition in Grad. DC bedeutet Direct Coordinate
- Die Position 2 PO2 gibt die Position auf der x-Achse an, wobei dies durch das X in eckiger Klammer zum Ausdruck kommt. Diese ist errechenbar über ein Polynom mit den drei in Klammern stehenden Koeffizienten KO21, KO22 und KO23.
- Die Position 3 PO3 gibt die Position auf der z-Achse an, wobei dies durch das Z in eckiger Klammer zum Ausdruck kommt. Auch diese ist errechenbar über ein Polynom mit drei in Klammern stehenden Koeffizienten KO31, KO32 und KO33.

Da die Polynome durch ihren Anfangswert, ihren Endwert und Koeffizienten, wie $a_2$, $a_3$, durch welche der Grad des Polynoms indirekt ablesbar ist, definierbar sind, sind auch die zur Definition des Polynoms verwendeten Werte wechselbar. Wird im Allgemeinen ein Polynom durch seine Koeffizienten beschrieben, so wird im Fall der Liste L1 auf der Position 2 als Koeffizient KO21 ein Endwert $X_e$ des Polynoms auf der x-Achse zur Definition herangezogen. Somit kann im Fall eines Polynoms dritten Grades auf einen Koeffizienten, wie z.B. $a_1$, verzichtet werden. Der Wert $X_e$ ergibt sich z.B. aus

$$x_e = a_0 + a_1 \cdot u + a_2 \cdot u^2 + a_3 \cdot u^3 \quad .$$

Dabei läßt sich u als eine von einem Drehwinkel c abhängige Variable definieren.

Bei einer Verdrehung wie sie in FIG 2 dargestellt ist, ist $X_e$ also auch zusätzlich von z abhängig. Zur Beschreibung einer Position im Raum sind definierte Nullpositionen erforderlich. In Fällen, in denen es vorteilhaft ist die Nullposition zu verschieben sind auch die Änderungen bezüglich der Koeffizienten mit zu berücksichtigen. Bei Veränderung der Nullposition ist dann beispielsweise auch der $X_e$ eine Funktion, welche von der Nullposition abhängt.

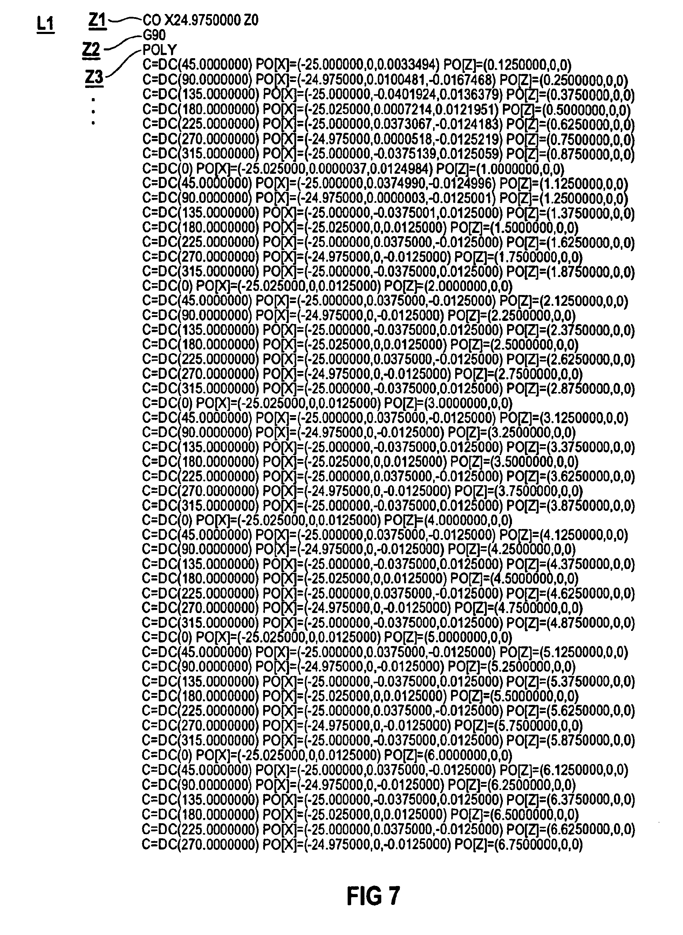

Die Darstellung gemäß FIG 7 zeigt eine zweite Liste L2 bzw. abhängig von der Betrachtungsart eine Tabelle zur Beschreibung von Splines bzw. Polynomen gemäß der Erfindung. Im Vergleich zur Liste in FIG 6 verläuft die Änderung der z-Achse linear.

In der ersten Zeile Z1 der Liste L2 erfolgt die Festlegung der Startposition.

In der zweiten Zeile Z2 der Liste L2 wird das absolute Bezugssystem angegeben.

In der dritten Zeile der List wird der Beginn der Polynombeschreibung angezeigt.

Sowohl die Liste nach FIG 6 als auch die Liste aus FIG 7 sind als Teil eines Teileprogramms einer Bearbeitungsmaschine betrachtbar. Die Winkelpositionen c haben jeweils einen Abstand von 45°. Die Abstände sind entsprechend den Abtasttheoremen ermittelbar.

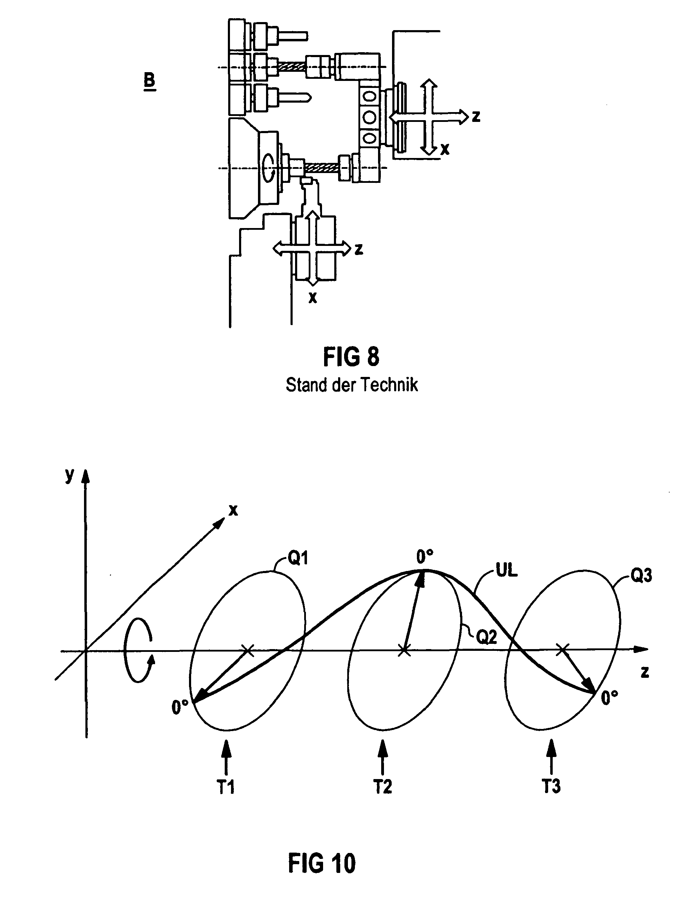

Die Darstellung gemäß FIG 8 zeigt zur allgemeinen Veranschaulichung von Achsen bei einer Bearbeitungsmaschine B die Achsen z, x und C bei einer einspindligen Stangendrehmaschine.

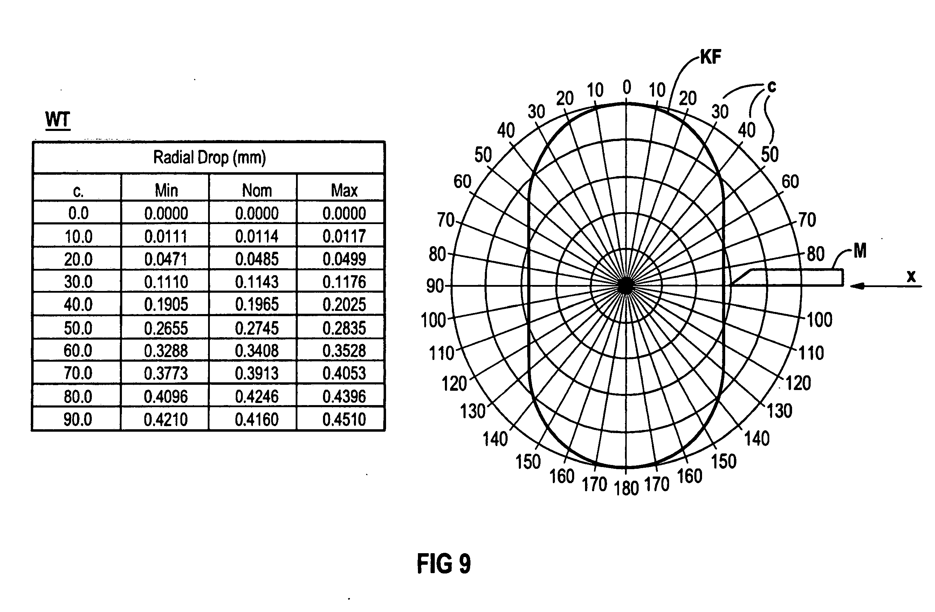

In FIG 9 wird eine Wertetabelle WT der Form einer freien Kontur KF unter Berücksichtigung der Winkelparameter c gegenübergestellt. Den Winkeln c ist auf einer x-Achse x jeweils ein minimaler Wert Min, ein nominaler Wert Nom und ein maximaler Wert Max zugeordnet. Zur Veranschaulichung ist in der FIG 9 weiterhin ansatzweise ein Drehmeisel M als Werkzeug zum abspanen gezeigt, wobei dieser Drehmeisel M den radialen Versatz, d.h. drop in Richtung der x-Achse x auszuführen hat. Gemäß den gezeigten Angaben für den Winkelparameter c ist der Nullwinkel als Koordinatenursprung für diese Achse in der oberen Bildhälfte befindlich. Dieser Koordinatenursprung läßt sich für verschiedene Abschnitte, Splines verschieben. Ist es bei einer Freiformfläche vorteilhaft verschiedene Nullpunkte für Winkelbetrachtungen heranzuziehen, so ist die gemäss der Erfindung vereinfacht.

Ein Beispiel für die Verschiebung des Koordinatenursprungs für die Winkelbetrachtung zeigt FIG 10. Gezeigt werden perspektivisch drei Querschnitte Q1, Q2 und Q3 eines Körpers, wobei jedem Querschnitt eine Tabelle T1, T2 und T3 zugeordnet ist, wobei die Tabellen in der FIG 10 nicht explizit dargestellt sind. Jede Tabelle enthält die zur Beschreibung des Querschittverlaufes nötigen Splines. Jede der Tabellen bezieht sich auf eine andere Null- Grad- Position 0°. Die Aneinanderreihung der Null- Grad- Positionen ergibt eine Ursprungslinie UL, welche für die Positionen auf der x- Achse die Ürsprünge auch der C- Achse C angibt. Damit ist auch eine Interpolation der Null- Grad- Positionen, d.h. der Nullage ermöglicht. Bisher waren nur diskrete Umschaltungen ausführbar, wobei diese erhebliche Nachteile mit sich brachten, wie beispielsweise große Datenmengen oder auch Abstriche bei der Genauigkeit. Weisen Sektoren S1, S2, S3, S4 oder S5 wie in FIG 1 unterschiedliche Nullagen auf, so waren bisher bei Linearinterpolationen sehr große Datenmengen erforderlich. Ein Vorteil der Erfindung ist so die Nutzung der Parameter c der C- Achse als Interpolationsparameter. Die Nullposition kann sich kontinuierlich mit Z ändern, oder auch abschnittsweise mit Z bzw. auch konstant bleiben.

Wird ein Werkzeug wie in FIG 9 beweglich auf der x-Achse x geführt, so ist aus FIG 10 leicht ersichtlich, dass die Position X beispielsweise eines Drehmeisels von zwei Parametern c und z abhängen kann. Durch z soll hier der Vorschub für das Werkzeug in z-Richtung dargestellt werden. Natürlich ist auch hier, wie bei allen anderen Bewegungen, die vorkommen, der Vorschub nur eine Relativbewegung. Sowohl das Werkstück, das Werkzeug, als auch beide zusammen können sich zueinander bewegen. Bei einem Spiralvorschub kann sich eine Überlagerung zweier Kurven ergeben, welche durch die Funktionen $f_1(c)$ und $f_2(z)$ gegeben sind und was zur Gleichung $x = \sum (f_2(c) + f_2(z))$ führt.

**Patentansprüche**

1. Steuerungsverfahren zur dreidimensionalen Bahnbeschreibung bei einer industriellen Bearbeitungsmaschine (B) wie einer Werkzeugmaschine, einem Handhabungsautomaten, oder dergleichen zur Beschreibung zumindest eines Kurvenverlaufes für eine Bewegungsführung dadurch gekennzeichet, dass zur Beschreibung des Kurvenverlaufes (KP) zumindest eine Interpolation angewandt wird, wobei zumindest ein Interpolationsparameter eine Funktion einer Winkelangabe (c) darstellt und wobei durch den Kurvenverlauf eine Unrundkontur und/oder eine Freiformfläche eines Werkstückes (1) beschrieben wird.

2. Steuerungsverfahren nach Anspruch 1 **dadurch gekennzeichnet, dass** als Interpolation zumindest eine Polynomfunktion angewandt wird.

3. Steuerungsverfahren nach Anspruch 1, **dadurch gekennzeichnet, dass** als Interpolation zumindest ein Spline angewandt wird.

4. Steuerungsverfahren nach einem der vorgenannten Ansprüche **dadurch gekennzeichnet, dass** aus dem Kurvenverlauf eine Bewegungsführung zumindest eines bewegten Körpers (1) beschrieben wird.

5. Verwendung des Verfahrens nach einem der vorgenannten Ansprüche zur Beschreibung einer Bewegung zumindest eines Körpers (1).

6. Verwendung des Verfahrens nach einem der Ansprüche 1 bis 4 zur Beschreibung der Bewegung von zumindest zwei Körpern zueinander.

7. Verwendung des Verfahrens nach einem der vorgenannten Ansprüche bei einer Drehmaschine.

8. Werkzeugmaschine zur Ausführung des Verfahrens nach einem der Ansprüche 1 bis 4, **dadurch gekenn - zeichnet**, dass die Werkzeugmaschine eine Drehmaschine ist.

9. Handhabungsautomat zur Ausführung des Verfahrens nach einem der Ansprüche 1 bis 4.

**Claims**

1. Controlling method for the three-dimensional path definition in an industrial processing machine (B), such as a machine tool, a robot and the like, for describing at least one curve for a guided movement **characterised in that** for describing the curve (KP) at least one interpolation is performed, wherein at least one interpolation parameter is a function of an angle (c) and wherein from the curve, an eccentric contour and/or a freeform surface of a workpiece (1) is described.

2. Controlling method according to claim 1, **characterised in that** the interpolation is performed by using at least one polynomial function.

3. Controlling method according to claim 1, **characterised in that** the interpolation is performed by using at least one spline function.

4. Controlling method according to one of the preceding claims **characterised in that** a guided movement of at least one moving body (1) is described from the curve.

5. Use of the method according to one of the preceding claims for describing a movement of at least one body (1).

6. Use of the method according to one of claims 1 to 4 for describing the movement of at least two bodies relative to one another.

7. Use of the method according to one of the preceding claims in a turning machine.

8. Machine tool for executing the method according to one of claims 1 to 4, **characterised in that** the machine tool is a turning machine.

9. Robot for executing the method according to one of claims 1 to 4.

**Revendications**

1. Procédé de commande pour la description en trois dimensions de la trajectoire d'une machine ( B ) industrielle de traitement, comme une machine-outil, un automate de manipulation ou analogue, pour la description d'au moins une trajectoire courbe pour un guidage de déplacement, **caractérisé en ce que** l'on applique, pour la description de la trajectoire ( KP ) courbe, au moins une interpolation, au moins un paramètre d'interpolation, représentant une fonction d'une indication ( C ) d'angle et un contour non circulaire et/ou une surface de forme libre d'une pièce ( 1 ), étant décrit par la trajectoire courbe.

2. Procédé de commande suivant la revendication 1, **caractérisé en ce que** l'on applique comme interpolation au moins une fonction polynôme.

3. Procédé de commande suivant la revendication 1, **caractérisé en ce que** l'on applique comme interpolation au moins un spline.

4. Procédé de commande suivant l'une des revendications précédentes, **caractérisé en ce qu'**un guidage de déplacement d'au moins un corps ( 1 ) déplacé est décrit par la trajectoire courbe.

5. Utilisation du procédé suivant l'une des revendications précédentes pour la description d'un déplacement d'au moins un corps ( 1 ).

6. Utilisation du procédé suivant l'une des revendications 1 à 4 pour la description du déplacement d'au moins deux corps l'un par rapport à l'autre.

7. Utilisation du procédé suivant l'une des revendications précédentes dans une machine tournante.

8. Machine outils pour l'exécution du procédé suivant l'une des revendications 1 à 4, **caractérisée en ce que** la machine-outil est une machine tournante.

9. Automate de manipulation pour l'exécution du procédé suivant l'une des revendications 1 à 4.

z - y

x - y

S1   S2   S3   S4   S5

**FIG 1**

EP 1 369 759 B1

FIG 2

EP 1 369 759 B1

```
C96.0909 X.1000000
C96.5455 X1.000000
C97.0000 X1.000000
C97.3174 X0.994001
C97.6347 X0.975850
C97.9475 X0.945807
C98.2603 X0.903268
C98.5633 X0.849506
C98.8663 X0.782004
```

**FIG 3**

**FIG 4**

**FIG 5**

EP 1 369 759 B1

**P01**      **P02**      **P03**

**L1**

**K021**   **K022**   **K023**      **K031**   **K032**   **K033**

C=OC(45.0000000) PO[X]=(-25.000000,0.0374990,-0.0124996) PO[Z]=(1.1250000,2.8661583,-1.211381)
C=DC(90.0000000) PO[X]=(-24.975000,0.0000003,-0.0125001) PO[Z]=(1.2500000,-0.7679848,0.3245886)
C=DC(135.0000000) PO[X]=(-25.000000,-0.0375001,0.0125000) PO[Z]=(1.3750000,0.2057809,-0.0869732)
C=DC(180.0000000) PO[X]=(-25.025000,0,0.0125000) PO[Z]=(1.5000000,-0.0551388,0.0233044)
C=DC(225.0000000) PO[X]=(-25.000000,0.0375000,-0.0125000) PO[Z]=(1.6250000,0.0147744,-0.0062444)
C=DC(270.0000000) PO[X]=(-24.975000,0,-0.0125000) PO[Z]=(1.7500000,-0.0039588,0.0016732)
C=DC(315.0000000) PO[X]=(-25.000000,-0.0375000,0.0125000) PO[Z]=(1.8750000,0.0010608,-0.0004483)

**FIG 6**

L1   Z1 — CO X24.9750000 Z0
        G90
  Z2 — POLY
  Z3 — C=DC(45.0000000) PO[X]=(-25.000000,0,0.0033494) PO[Z]=(0.1250000,0,0)
     •  C=DC(90.0000000) PO[X]=(-24.975000,0.0100481,-0.0167468) PO[Z]=(0.2500000,0,0)
     •  C=DC(135.0000000) PO[X]=(-25.000000,-0.0401924,0.0136379) PO[Z]=(0.3750000,0,0)
     •  C=DC(180.0000000) PO[X]=(-25.025000,0.0007214,0.0121951) PO[Z]=(0.5000000,0,0)
C=DC(225.0000000) PO[X]=(-25.000000,0.0373067,-0.0124183) PO[Z]=(0.6250000,0,0)
C=DC(270.0000000) PO[X]=(-24.975000,0.0000518,-0.0125219) PO[Z]=(0.7500000,0,0)
C=DC(315.0000000) PO[X]=(-25.000000,-0.0375139,0.0125059) PO[Z]=(0.8750000,0,0)
C=DC(0) PO[X]=(-25.025000,0.0000037,0.0124984) PO[Z]=(1.0000000,0,0)
C=DC(45.0000000) PO[X]=(-25.000000,0.0374990,-0.0124996) PO[Z]=(1.1250000,0,0)
C=DC(90.0000000) PO[X]=(-24.975000,0.0000003,-0.0125001) PO[Z]=(1.2500000,0,0)
C=DC(135.0000000) PO[X]=(-25.000000,-0.0375001,0.0125000) PO[Z]=(1.3750000,0,0)
C=DC(180.0000000) PO[X]=(-25.025000,0,0.0125000) PO[Z]=(1.5000000,0,0)
C=DC(225.0000000) PO[X]=(-25.000000,0.0375000,-0.0125000) PO[Z]=(1.6250000,0,0)
C=DC(270.0000000) PO[X]=(-24.975000,0,-0.0125000) PO[Z]=(1.7500000,0,0)
C=DC(315.0000000) PO[X]=(-25.000000,-0.0375000,0.0125000) PO[Z]=(1.8750000,0,0)
C=DC(0) PO[X]=(-25.025000,0,0.0125000) PO[Z]=(2.0000000,0,0)
C=DC(45.0000000) PO[X]=(-25.000000,0.0375000,-0.0125000) PO[Z]=(2.1250000,0,0)
C=DC(90.0000000) PO[X]=(-24.975000,0,-0.0125000) PO[Z]=(2.2500000,0,0)
C=DC(135.0000000) PO[X]=(-25.000000,-0.0375000,0.0125000) PO[Z]=(2.3750000,0,0)
C=DC(180.0000000) PO[X]=(-25.025000,0,0.0125000) PO[Z]=(2.5000000,0,0)
C=DC(225.0000000) PO[X]=(-25.000000,0.0375000,-0.0125000) PO[Z]=(2.6250000,0,0)
C=DC(270.0000000) PO[X]=(-24.975000,0,-0.0125000) PO[Z]=(2.7500000,0,0)
C=DC(315.0000000) PO[X]=(-25.000000,-0.0375000,0.0125000) PO[Z]=(2.8750000,0,0)
C=DC(0) PO[X]=(-25.025000,0,0.0125000) PO[Z]=(3.0000000,0,0)
C=DC(45.0000000) PO[X]=(-25.000000,0.0375000,-0.0125000) PO[Z]=(3.1250000,0,0)
C=DC(90.0000000) PO[X]=(-24.975000,0,-0.0125000) PO[Z]=(3.2500000,0,0)
C=DC(135.0000000) PO[X]=(-25.000000,-0.0375000,0.0125000) PO[Z]=(3.3750000,0,0)
C=DC(180.0000000) PO[X]=(-25.025000,0,0.0125000) PO[Z]=(3.5000000,0,0)
C=DC(225.0000000) PO[X]=(-25.000000,0.0375000,-0.0125000) PO[Z]=(3.6250000,0,0)
C=DC(270.0000000) PO[X]=(-24.975000,0,-0.0125000) PO[Z]=(3.7500000,0,0)
C=DC(315.0000000) PO[X]=(-25.000000,-0.0375000,0.0125000) PO[Z]=(3.8750000,0,0)
C=DC(0) PO[X]=(-25.025000,0,0.0125000) PO[Z]=(4.0000000,0,0)
C=DC(45.0000000) PO[X]=(-25.000000,0.0375000,-0.0125000) PO[Z]=(4.1250000,0,0)
C=DC(90.0000000) PO[X]=(-24.975000,0,-0.0125000) PO[Z]=(4.2500000,0,0)
C=DC(135.0000000) PO[X]=(-25.000000,-0.0375000,0.0125000) PO[Z]=(4.3750000,0,0)
C=DC(180.0000000) PO[X]=(-25.025000,0,0.0125000) PO[Z]=(4.5000000,0,0)
C=DC(225.0000000) PO[X]=(-25.000000,0.0375000,-0.0125000) PO[Z]=(4.6250000,0,0)
C=DC(270.0000000) PO[X]=(-24.975000,0,-0.0125000) PO[Z]=(4.7500000,0,0)
C=DC(315.0000000) PO[X]=(-25.000000,-0.0375000,0.0125000) PO[Z]=(4.8750000,0,0)
C=DC(0) PO[X]=(-25.025000,0,0.0125000) PO[Z]=(5.0000000,0,0)
C=DC(45.0000000) PO[X]=(-25.000000,0.0375000,-0.0125000) PO[Z]=(5.1250000,0,0)
C=DC(90.0000000) PO[X]=(-24.975000,0,-0.0125000) PO[Z]=(5.2500000,0,0)
C=DC(135.0000000) PO[X]=(-25.000000,-0.0375000,0.0125000) PO[Z]=(5.3750000,0,0)
C=DC(180.0000000) PO[X]=(-25.025000,0,0.0125000) PO[Z]=(5.5000000,0,0)
C=DC(225.0000000) PO[X]=(-25.000000,0.0375000,-0.0125000) PO[Z]=(5.6250000,0,0)
C=DC(270.0000000) PO[X]=(-24.975000,0,-0.0125000) PO[Z]=(5.7500000,0,0)
C=DC(315.0000000) PO[X]=(-25.000000,-0.0375000,0.0125000) PO[Z]=(5.8750000,0,0)
C=DC(0) PO[X]=(-25.025000,0,0.0125000) PO[Z]=(6.0000000,0,0)
C=DC(45.0000000) PO[X]=(-25.000000,0.0375000,-0.0125000) PO[Z]=(6.1250000,0,0)
C=DC(90.0000000) PO[X]=(-24.975000,0,-0.0125000) PO[Z]=(6.2500000,0,0)
C=DC(135.0000000) PO[X]=(-25.000000,-0.0375000,0.0125000) PO[Z]=(6.3750000,0,0)
C=DC(180.0000000) PO[X]=(-25.025000,0,0.0125000) PO[Z]=(6.5000000,0,0)
C=DC(225.0000000) PO[X]=(-25.000000,0.0375000,-0.0125000) PO[Z]=(6.6250000,0,0)
C=DC(270.0000000) PO[X]=(-24.975000,0,-0.0125000) PO[Z]=(6.7500000,0,0)

**FIG 7**

**B**

**FIG 8**

Stand der Technik

**FIG 10**

FIG 9

**WT**

| c. | Radial Drop (mm) | | |
| --- | --- | --- | --- |
| | Min | Nom | Max |
| 0.0 | 0.0000 | 0.0000 | 0.0000 |
| 10.0 | 0.0111 | 0.0114 | 0.0117 |
| 20.0 | 0.0471 | 0.0485 | 0.0499 |
| 30.0 | 0.1110 | 0.1143 | 0.1176 |
| 40.0 | 0.1905 | 0.1965 | 0.2025 |
| 50.0 | 0.2655 | 0.2745 | 0.2835 |
| 60.0 | 0.3288 | 0.3408 | 0.3528 |
| 70.0 | 0.3773 | 0.3913 | 0.4053 |
| 80.0 | 0.4096 | 0.4246 | 0.4396 |
| 90.0 | 0.4210 | 0.4160 | 0.4510 |

14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0417337 A1

- EP 0543141 A1